# EUROPÄISCHE PATENTSCHRIFT

(11) **EP 2 065 618 B1**
(45) Veröffentlichungstag und Bekanntmachung des Hinweises auf die Patenterteilung: **23.03.2011**
(21) Anmeldenummer: 08169243.6
(22) Anmeldetag: 17.11.2008
(51) Int. Cl.: F16H 45/02

(54) **Hydrodynamische Kopplungseinrichtung, insbesondere Drehmomentwandler**
Hydro-dynamic coupling device, especially a torque converter
Dispositif d'embrayage hydrodynamique, notamment convertisseur de couple

(30) Priorität: 29.11.2007 DE 102007057437; 20.08.2008 DE 102008041367
(43) Veröffentlichungstag der Anmeldung: 03.06.2009
(73) Patentinhaber: ZF Friedrichshafen AG, 88038 Friedrichshafen (DE)
(72) Erfinder: Krüger, Thomas, 12683, Berlin (DE); Peterseim, Michael, 97493, Bergrheinfeld (DE); Sasse, Christoph, 97422, Schweinfurt (DE); Wack, Erwin, 97464, Niederwerrn (DE)

(56) Entgegenhaltungen:
- EP-A- 1 099 879
- DE-A1- 10 358 901
- US-A1- 2004 128 992

## Beschreibung

Die vorliegende Erfindung betrifft eine hydrodynamische Kopplungseinrichtung, insbesondere Drehmomentwandler, umfassend ein Gehäuse mit einem Pumpenrad, ein in einem Innenraum des Gehäuses angeordnetes Turbinenrad und eine Überbrückungskupplungsanordnung mit einer ersten Reibflächenformation, die mit dem Gehäuse zur gemeinsamen Drehung um eine Drehachse verbunden ist, einer zweiten Reibflächenformation, die mit dem Turbinenrad zur gemeinsamen Drehung verbunden ist, und einem Kolbenelement, wobei die zweite Reibflächenformation über eine Torsionsdämpferanordnung mit einer Turbinenradnabe des Turbinenrads gekoppelt ist, wobei die Torsionsdämpferanordnung einen ersten Torsionsschwingungsdämpferbereich mit einem mit der zweiten Reibflächenformation verbundenen ersten Eingangsbereich und einem über eine Mehrzahl erster Dämpferfedereinheiten mit dem ersten Eingangsbereich gekoppelten ersten Ausgangsbereich sowie einen zweiten Torsionsschwingungsdämpferbereich mit einem mit dem ersten Ausgangsbereich verbundenen zweiten Eingangsbereich und einem über eine Mehrzahl zweiter Dämpferfedereinheiten mit dem zweiten Eingangsbereich gekoppelten zweiten Ausgangsbereich umfasst.

Eine derartige als hydrodynamischer Drehmomentwandler ausgebildete Kopplungseinrichtung ist aus der DE 103 58 901 A1 bekannt. Über die beiden seriell gestaffelten und bei eingerückter Überbrückungskupplung an das Wandlergehäuse angekoppelten Torsionsschwingungsdämpferbereiche kann im Überbrückungszustand unmittelbar ein Drehmoment zwischen dem Gehäuse und der Turbinenradnabe übertragen werden. Im Drehmomentwandlungsbetrieb, also bei im Wesentlichen vollständig ausgerückter Überbrückungskupplung wird ein Drehmoment von der Turbinenradschale in den ersten Ausgangsbereich bzw. den zweiten Eingangsbereich eingeleitet, so dass der zweite Torsionsschwingungsdämpferbereich zwischen der Turbinenradschale und der Turbinenradnabe wirksam ist, während der erste Torsionsschwingungsdämpferbereich zur Erhöhung der primärseitigen Masse des zweiten Torsionsschwingungsdämpferbereichs beiträgt.

Bei derartigen hydrodynamischen Kopplungseinrichtungen wird zum Vermeiden von Energieverlusten in einem Zustand, in welchem die Überbrückungskupplung ausgerückt ist, durch diese also kein Drehmoment übertragen werden kann, die Phase, in welcher der hydrodynamische Kreislauf zur Übertragung bzw. auch Verstärkung eines Drehmoments wirksam ist, so kurz als möglich gehalten. Dies wiederum hat zur Folge, dass der Zeitanteil, in welchem über die Torsionsschwingungsdämpferanordnung ein Drehmoment zu übertragen ist, zunimmt, was höhere Anforderungen an das Schwingungsdämpfungsvermögen der Torsionsschwingungsdämpferanordnung stellt.

Es ist daher die Aufgabe der vorliegenden Erfindung, eine hydrodynamische Kopplungseinrichtung bereitzustellen, welche bei kompakter Bauart und optimaler Bauraumausnutzung ein verbessertes Schwingungsdämpfungsverhalten bereitstellen kann.

Gemäß einem ersten Aspekt der vorliegenden Erfindung wird diese Aufgabe gelöst durch eine hydrodynamische Kopplungseinrichtung, insbesondere Drehmomentwandler, umfassend ein Gehäuse mit einem Pumpenrad, ein in einem Innenraum des Gehäuses angeordnetes Turbinenrad und eine Überbrückungskupplungsanordnung mit einer ersten Reibflächenformation, die mit dem Gehäuse zur gemeinsamen Drehung um eine Drehachse verbunden ist, einer zweiten Reibflächenformation, die mit dem Turbinenrad zur gemeinsamen Drehung verbunden ist, und einem Kolbenelement, wobei die zweite Reibflächenformation über eine Torsionsdämpferanordnung mit einer Turbinenradnabe des Turbinenrads gekoppelt ist, wobei die Torsionsdämpferanordnung einen ersten Torsionsschwingungsdämpferbereich mit einem mit der zweiten Reibflächenformation verbundenen ersten Eingangsbereich und einem über eine Mehrzahl erster Dämpferfedereinheiten mit dem ersten Eingangsbereich gekoppelten ersten Ausgangsbereich sowie einen zweiten Torsionsschwingungsdämpferbereich mit einem mit dem ersten Ausgangsbereich verbundenen zweiten Eingangsbereich und einem über eine Mehrzahl zweiter Dämpferfedereinheiten mit dem zweiten Eingangsbereich gekoppelten zweiten Ausgangsbereich umfasst, wobei das Turbinenrad mit einer Turbinenradschale und das Pumpenrad mit einer Pumpenradschale einen um die Drehachse umlaufenden, ringartigen Torus mit einem Torusvolumen begrenzen und wobei bei jedem der Torsionsschwingungsdämpferbereiche jede Dämpferfedereinheit ein Umhüllendenvolumen aufweist, welches im Wesentlichen das zwischen einer Außenumhüllungsfläche und einer Innenumhüllungsfläche eingeschlossene Volumen umfasst, wobei das durch alle Umhüllendenvolumina aller Dämpferfedereinheiten des ersten Torsionsschwingungsdämpferbereichs und des zweiten Torsionsschwingungsdämpferbereichs gebildete Gesamt-Umhüllendenvolumen im Bereich 1/11 bis 1/4 des Torusvolumens liegt.

Es hat sich gezeigt, dass bei Zuordnung der verglichenen Volumina im angegebenen Bereich im Verhältnis zu dem durch den Fluidkreislauf selbst eingenommenen Volumenbereich, welcher im Wesentlichen dem Torusvolumen entspricht, ein sehr großes und mithin wirksames Torsionsdämpfervolumen bereitgestellt werden kann.

Bei einer weiter optimierten Ausgestaltung kann beispielsweise vorgesehen sein, dass das Gesamt-Umhüllendenvolumen im Bereich von 1/7 bis 1/5 des Torusvolumens liegt.

Vorzugsweise sollte vorgesehen sein, dass das Umhüllendenvolumen aller erster Dämpferfedereinheiten höchsten 1/9 des Torusvolumens beträgt, wobei weiterhin in einer besonders vorteilhaften Ausgestaltungsvariante das Umhüllendenvolumen aller ersten Dämpferfedereinheiten wenigstens 1/20 des Torusvolumens beträgt.

Um bei den beiden Torsionsschwingungsdämpferbereichen gleichermaßen gute Schwingungsdämpfungscharakteristiken erhalten zu können, was insbesondere auch dann von Bedeutung sein kann, wenn im Drehmomentübertragungszustand über das Turbinenrad beispielsweise der zweite Torsionsschwingungsdämpferbereich wirksam ist, wird vorgeschlagen, dass das Umhüllendenvolumen aller zweiten Dämpferfedereinheiten wenigstens die Hälfte des Umhüllendenvolumens aller ersten Dämpferfedereinheiten beträgt.

Um innerhalb der einzelnen Torsionsschwingungsdämpferbereiche bzw. der Dämpferfedereinheiten derselben ausreichende Federkräfte bereitstellen zu können, ist es vorteilhaft, wenn bei den ersten Dämpferfedereinheiten oder/und den zweiten Dämpferfedereinheiten das Federmaterialvolumen im Bereich von 30% bis 55% des jeweiligen Umhüllendenvolumens liegt, wobei besonders bevorzugt das Federmaterialvolumen im Bereich von 35% bis 50% des jeweiligen Umhüllendenvolumens liegt.

Der Torus kann einen Mindestquerschnittsdurchmesser von wenigstens 40 mm, vorzugsweise von wenigstens 50 mm aufweisen.

Weiterhin kann eine optimale Bauraumausnutzung dadurch erlangt werden, dass der erste Torsionsschwingungsdämpferbereich einen Außendurchmesser aufweist, welcher im wesentlichen im Bereich des Torus-Außendurchmessers liegt, wobei vorzugsweise vorgesehen ist, dass der Außendurchmesser des ersten Schwingungsdämpferbereichs im Bereich vom 0,9 bis 1,1-fachen des Torus-Außendurchmessers liegt.

Um auch im Verhältnis zur Dimensionierung der Überbrückungskupplung eine optimierte Bauraumausnutzung für die Torsionsschwingungsdämpferanordnung zu erlangen, wird weiter vorgeschlagen, dass der Außendurchmesser des ersten Torsionsschwingungsdämpferbereichs 1,1 bis 1,4 mal größer ist als der Außendurchmesser der Reibflächenformationen.

Die Torsionsdämpferanordnung kann beispielsweise so ausgebildet sein, dass die Turbinenradschale mit dem ersten Ausgangsbereich und dem zweiten Eingangsbereich verbunden ist und der zweite Ausgangsbereich mit der Turbinenradnabe verbunden ist. In diesem Falle ist vorzugsweise weiter vorgesehen, dass das Verhältnis des mittleren Durchmessers des ersten Torsionsschwingungsdämpferbereichs zum mittleren Durchmesser des zweiten Torsionsschwingungsdämpferbereichs im Bereich von 1,5 bis 1,9 liegt, wobei weiter bevorzugt das Verhältnis im Bereich von 1,6 bis 1,8 liegt.

Bei einer Ausgestaltungsvariante der erfindungsgemäßen hydrodynamischen Kopplungseinrichtung kann weiter vorgesehen sein, dass jede Dämpferfedereinheit ein Außenumhüllendenvolumen aufweist, welches im Wesentlichen das von einer Außenumhüllungsfläche umschlossene Volumen umfasst, und dass ein durch alle Außenumhüllendenvolumina aller Dämpferfedereinheiten des ersten Torsionsschwingungsdämpferbereichs und des zweiten Torsionsschwingungsdämpferbereichs gebildetes Gesamt-Außenumhüllendenvolumen im Bereich von 1/6 bis 1/4 des Torusvolumens liegt, wobei weiter vorzugsweise vorgesehen ist, dass das Gesamt-Außenumhüllendenvolumen im Bereich von 1/5 bis 1/4 des Torusvolumens liegt.

Die eingangs genannte Aufgabe wird weiterhin gelöst durch eine hydrodynamische Kopplungseinrichtung, insbesondere Drehmomentwandler, umfassend ein Gehäuse mit einem Pumpenrad, ein in einem Innenraum des Gehäuses angeordnetes Turbinenrad und eine Überbrückungskupplungsanordnung mit einer ersten Reibflächenformation, die mit dem Gehäuse zur gemeinsamen Drehung um eine Drehachse verbunden ist, einer zweiten Reibflächenformation, die mit dem Turbinenrad zur gemeinsamen Drehung verbunden ist, und einem Kolbenelement, wobei die zweite Reibflächenformation über eine Torsionsdämpferanordnung mit einer Turbinenradnabe des Turbinenrads gekoppelt ist, wobei die Torsionsdämpferanordnung einen ersten Torsionsschwingungsdämpferbereich mit einem mit der zweiten Reibflächenformation verbundenen ersten Eingangsbereich und einem über eine Mehrzahl erster Dämpferfedereinheiten mit dem ersten Eingangsbereich gekoppelten ersten Ausgangsbereich sowie einen zweiten Torsionsschwingungsdämpferbereich mit einem mit dem ersten Ausgangsbereich verbundenen zweiten Eingangsbereich und einem über eine Mehrzahl zweiter Dämpferfedereinheiten mit dem zweiten Eingangsbereich gekoppelten zweiten Ausgangsbereich umfasst, wobei das Turbinenrad mit einer Turbinenradschale und das Pumpenrad mit einer Pumpenradschale einen um die Drehachse umlaufenden, ringartigen Torus mit einem Torusvolumen begrenzen und wobei bei jedem der Torsionsschwingungsdämpferbereiche jede Dämpferfedereinheit ein Außenumhüllendenvolumen aufweist, welches im Wesentlichen das von einer Außenumhüllungsfläche umschlossene Volumen umfasst, und wobei ein durch alle Außenumhüllendenvolumina aller Dämpferfedereinheiten des ersten Torsionsschwingungsdämpferbereichs und des zweiten Torsionsschwingungsdämpferbereichs gebildetes Gesamt-Außenumhüllendenvolumen im Bereich von 1/6 bis 1/4 des Torusvolumens liegt.

Vorzugsweise ist dabei vorgesehen, dass das Gesamt-Außenumhüllendenvolumen im Bereich von 1/5 und 1/4 des Torusvolumens liegt.

Gemäß einem weiteren vorteilhaften Aspekt kann vorgesehen sein, dass der erste Torsionsschwingungsdämpferbereich radial außerhalb des zweiten Torsionsschwingungsdämpferbereichs und vorzugsweise im gleichen axialen Bereich wie dieser angeordnet ist.

Die vorliegende Erfindung wird nachfolgend mit Bezug auf die beiliegenden Figuren detailliert beschrieben. Es zeigt:
- Fig. 1: eine Teil-Längsschnittansicht eines hydrodynamischen Drehmo- mentwandlers;
- Fig. 2: eine der Fig. 1 entsprechende Ansicht, welche die Prinzipien der vorliegenden Erfindung verdeutlicht;
- Fig. 3: eine Seitenansicht einer als Dämpferfedereinheit einsetzbaren Schraubendruckfeder;
- Fig. 4: eine Ansicht der Feder in Fig. 3 in Blickrichtung IV;
- Fig. 5: in prinzipartiger Darstellung ein Umhüllendenvolumen der in den Fig. 3 und 4 gezeigten Schraubendruckfeder;
- Fig. 6: ein der Fig. 2 entsprechende Darstellung, welche ein weiteres Prin- zip der vorliegenden Erfindung veranschaulicht.

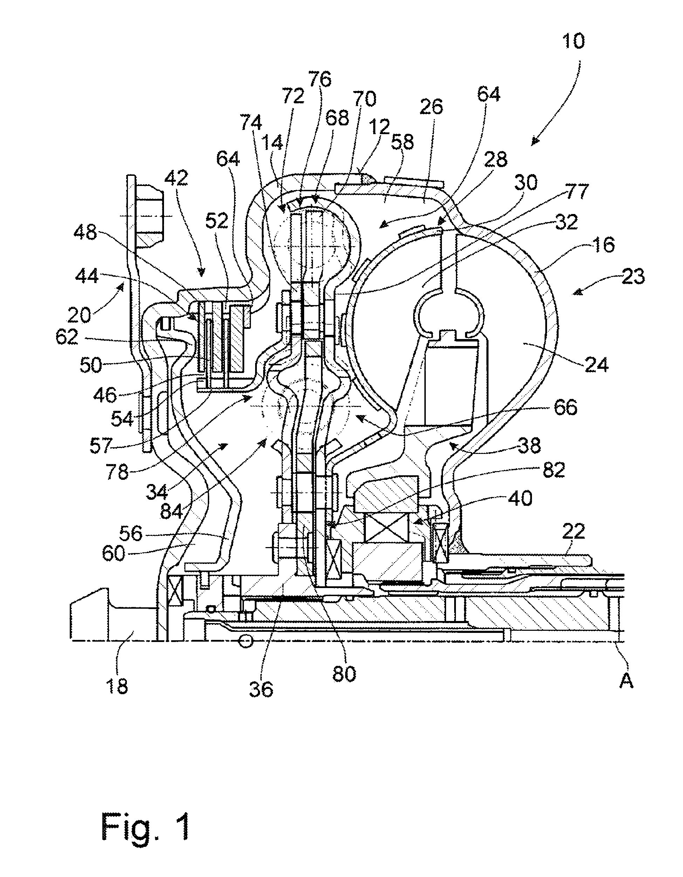

In Fig. 1 ist ein hydrodynamischer Drehmomentwandler allgemein mit 10 bezeichnet. Der Drehmomentwandler 10 umfasst ein Wandlergehäuse 12, das zwei Gehäuseschalen 14, 16 umfasst. Diese sind radial außen beispielsweise durch Verschweißung fest verbunden. Die Gehäuseschale 14 weist in ihrem radial inneren Bereich einen Lagerzapfen 18 auf, der in einer Aussparung einer über eine Kopplungsanordnung 20 und eine Flexplatte o. dgl. zur Drehung um eine Drehachse A anzukoppelnden Antriebswelle, beispielsweise Kurbelwelle, gelagert werden kann.

Die Gehäuseschale 16 bildet eine Pumpenradschale eines Pumpenrads 23, die in ihrem radial inneren Endbereich mit einer Pumpennabe 22 zum Antrieb einer in einem Getriebe vorgesehenen Ölpumpe verbunden ist und an ihrer Innenseite eine Mehrzahl von um die Drehachse A aufeinander folgend angeordneten Pumpenradschaufeln 24 trägt.

In einem Innenraum 26 des Wandlergehäuses 12 ist ein Turbinenrad 28 vorgesehen. Dieses weist eine Turbinenradschale 30 und eine Mehrzahl von um die Drehachse A aufeinander folgend daran vorgesehenen Turbinenradschaufeln 32 auf. Das Turbinenrad 28 ist im dargestellten Beispiel über eine Torsionsdämpferanordnung 34 mit einer Turbinenradnabe 36 zur Drehung gekoppelt. Über diese Turbinenradnabe 36 ist der hydrodynamische Drehmomentwandler 10 mit einer Abtriebswelle, beispielsweise einer Getriebeeingangswelle, drehgekoppelt.

Zwischen dem Turbinenrad 28 und dem Pumpenrad 23 ist ein allgemein mit 38 bezeichnetes Leitrad vorgesehen. Dieses ist über eine Freilaufanordnung 40 auf einer nicht dargestellten Stützhohlwelle getragen und somit nur in einer Richtung um diese Drehachse A drehbar, um eine Momentenabstützfunktionalität zu erreichen.

Eine Überbrückungskupplungsanordnung 42 umfasst zwei Reibflächenformationen 44, 46. Jede dieser Reibflächenformationen 44, 46 weist eine Mehrzahl von Reiblamellen bzw. Reibelementen 48, 50 auf. Die Reibelemente 48 der Reibflächenformation 44 sind mit einer an der Gehäuseschale 14 gebildeten Verzahnung 52 in Drehkopplungseingriff. Die Reibelemente 50 der Reibflächenformation 46 sind mit einer Verzahnung 54 an einem Reibelemententräger 57 in Drehkopplungseingriff. Dieser Reibelemententräger 57 wiederum ist über die Torsionsdämpferanordnung 34 mit dem Turbinenrad 28 bzw. der Turbinenradnabe 36 zur Drehmomentübertragung gekoppelt. Die beiden Verzahnungen 52, 54 sind im Wesentlichen in axialer Richtung langgestreckt, um eine Axialbewegbarkeit der Reibelemente 48, 50 zu gewährleisten.

Ein Kolben 56 ist an der Gehäuseschale 14 axial bewegbar geführt und radial innen und radial außen durch entsprechende Dichtungselemente fluiddicht abgeschlossen. Der Kolben 56 unterteilt den Innenraum 26 des Wandlergehäuses 12 in einen ersten Raumbereich 58, welcher auch das Turbinenrad 28, das Leitrad 38 sowie die Reibflächenformationen 44, 46 enthält, und einen zweiten Raumbereich 60, welcher im Wesentlichen zwischen dem Kolben 56 und der Gehäuseschale 14 begrenzt ist. In seinem radial äußeren Bereich weist der Kolben 56 einen Beaufschlagungsbereich 62 auf, mit welchem er bei Verschiebung in Richtung Einrücken die Reibflächenformationen 44, 46 gegeneinander presst und somit in Reibeingriff bringt. Ein am Gehäusedeckel 14 vorgesehener Sicherungsring 64 sorgt für eine axiale Abstützung.

Die Bewegung des Kolbens 56 in Richtung Einrücken, also mit seinem Beaufschlagungsbereich 62 auf die Reibflächenformationen 44, 46 zu, wird durch die Zufuhr von Fluid in den zweiten Raumbereich 60 erlangt. Durch die Variation des Fluiddrucks im zweiten Raumbereich 60 im Vergleich zum Fluiddruck im ersten Raumbereich 58 kann die Lage des Kolbenelements 56 und somit der Drehmomentübertragungszustand der Überbrückungskupplungsanordnung 42 beeinflusst werden.

Die Torsionsdämpferanordnung 34 umfasst zwei Torsionsschwingungsdämpferbereiche 64, 66. Ein erster Eingangsbereich 68 des radial äußeren ersten Torsionsschwingungsdämpferbereichs 64 umfasst ein Zentralscheibenelement 70, das durch einen bzw. durch mehrere Nietbolzen mit dem Reibelemententräger 57 fest verbunden ist. Ein erster Ausgangsbereich 72 des ersten Torsionsschwingungsdämpferbereichs 64 umfasst den radial äußeren Bereich zweier Deckscheibenelemente 74, 77, die beidseits des Zentralscheibenelements 70 angeordnet sind und miteinander beispielsweise durch mehrere das Zentralscheibenelement 70 auch mit Umfangsbewegungsspiel durchsetzende Niezbolzen miteinander fest verbunden sind. Über eine Mehrzahl erster Dämpferfedereinheiten 76 sind der erste Eingangsbereich 68 und der erste Ausgangsbereich 72 zur Drehmomentübertragung miteinander gekoppelt, auf Grund der Federelastizität der ersten Dämpferfedereinheiten 76 jedoch bezüglich einander um die Drehachse A drehbar. Es sei darauf hingewiesen, dass selbstverständlich das Zentralscheibenelement 68 und die Deckscheibenelemente 74, 77 für die ersten Dämpferfedereinheiten 76 jeweilige Umfangsabstützbereiche aufweisen, um ein Drehmoment aufnehmen bzw. weiterleiten zu können.

Der radial innen liegende zweite Torsionsschwingungsdämpferbereich 66 umfasst als zweiten Eingangsbereich 78 den radial inneren Bereich der beiden Deckscheibenelemente 74, 77, so dass durch integrale Ausgestaltung an den jeweiligen Deckscheibenelementen 74, 77 der erste Ausgangsbereich 72 und der zweite Eingangsbereich 78 miteinander verbunden sind. Ein weiteres Zentralscheibenelement 80 bildet im Wesentlichen den zweiten Ausgangsbereich 82 des zweiten Torsionsschwingungsdämpferbereichs 66. Dieser zweite Ausgangsbereich 82 ist radial innen durch Verschweißung mit der Turbinenradnabe 36 fest verbunden. Ferner sind radial innen die beiden Deckscheibenelemente 74, 77 miteinander und der Turbinenradschale 30 fest verbunden, so dass die Turbinenradschale 30 des Turbinenrads 28 mit dem zweiten Eingangsbereich 78 und mithin dem ersten Ausgangsbereich 72 fest verbunden ist.

Eine Mehrzahl zweiter Dämpferfedereinheiten 84, die, ähnlich wie die ersten Dämpferfedereinheiten 76, ebenfalls in Umfangsrichtung aufeinander folgend um die Drehachse A herum angeordnet sind, stellt eine Kopplung zwischen dem zweiten Eingangsbereich 78, also den radial innen liegenden Bereichen der Deckscheibenelemente 74, 77, und dem zweiten Ausgangsbereich 82, also dem zweiten Zentralscheibenelement 80, her. Auch hier weisen die jeweiligen Eingangs- bzw. Ausgangsbereiche Umfangsabstützbereiche für die zweiten Dämpferfedereinheiten 84 auf.

Zu den ersten Dämpferfedereinheiten 76 bzw. den zweiten Dämpferfedereinheiten 84 sei ausgeführt, dass diese im Allgemeinen mit Schraubendruckfedern ausgebildet sind, die beispielsweise in Umfangsrichtung gekrümmt verlaufend angeordnet sind. Je nach erforderlicher Dämpfungscharakteristik, können beispielsweise bei jedem der Torsionsschwingungsdämpferbereiche 64, 66 in Umfangsrichtung aufeinander folgend zwei derartige Dämpferfedereinheiten 76, 84 vorgesehen sein, die näherungsweise über einen Winkelbereich 180° langgestreckt sind. Wie bereits ausgeführt, können die Dämpferfedereinheiten 76, 84 eine Schraubendruckfeder umfassen, können jedoch auch mit mehreren in Umfangsrichtung aufeinander folgenden und näherungsweise tangential sich erstreckenden und in Umfangsendbereichen aneinander abgestützten Schraubendruckfedern ausgebildet sein. Auch können, wie dies in der Fig. 1 anhand der Dämpferfedereinheiten 84 des radial innen liegenden zweiten Torsionsschwingungsdämpferbereichs 66 veranschaulicht ist, die Dämpferfedereinheiten ineinander geschachtelte Schraubendruckfedern umfassen, die durch unterschiedliche Längenausgestaltung abhängig vom Relativdrehwinkel zwischen einem jeweiligen Eingangsbereich und einem Ausgangsbereich gestuft wirksam werden können.

Bei der in Fig. 1 dargestellten Torsionsdämpferanordnung 34 ist also der radial äußere erste Torsionsschwingungsdämpferbereich 64 dann wirksam, wenn ein Drehmoment über die Überbrückungskupplungsanordnung 42 übertragen wird. Das Drehmoment wird dann über den ersten Eingangsbereich 68 und über die ersten Dämpferfedereinheiten 76 auf den ersten Ausgangsbereich 72 übertragen. Von diesem bzw. dem damit fest verbunden ausgebildeten zweiten Eingangsbereich 78 gelangt das Drehmoment über die zweiten Dämpferfedereinheiten 84 und den zweiten Ausgangsbereich 82 zur Turbinenradnabe 36. Die beiden Torsionsschwingungsdämpferbereiche 64, 66 sind also seriell wirksam.

Bei ausgerückt gehaltener Überbrückungskupplungsanordnung 42 und Drehmomentübertragung bzw. Verstärkung über den Fluidkreislauf, der zwischen dem Turbinenrad 28 und dem Pumpenrad 23 bzw. dem Leitrad 38 umgewälzt wird, wird das Drehmoment über die Turbinenradschale 30 in den ersten Ausgangsbereich 72 bzw. den zweiten Eingangsbereich 78 eingeleitet und mithin über die zweiten Dämpferfedereinheiten 84 und den zweiten Ausgangsbereich 82 auf die Turbinenradnabe 36 übertragen.

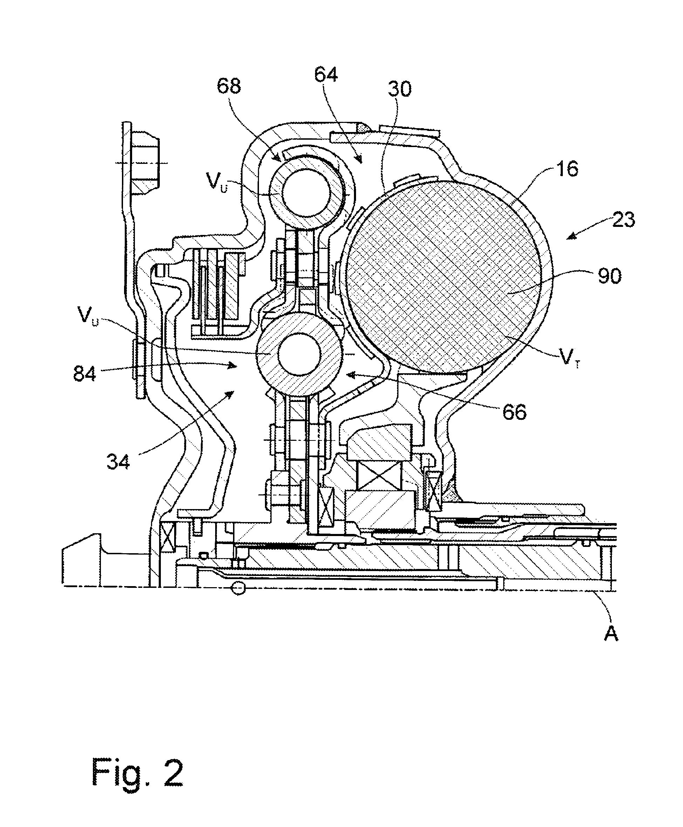

Nachfolgend wird mit Bezug auf die Fig. 2 bis 5 ein Konstruktionsprinzip des erfindungsgemäß aufgebauten hydrodynamischen Drehmomentwandlers 10 erläutert. Man erkennt zunächst in Fig. 2, dass zwischen der Gehäuseschale 16, die mithin auch als Schale des Pumpenrads 23 zu interpretieren ist, und der Turbinenradschale 30 ein um die Drehachse A umlaufender, also ringartiger Torus 90 begrenzt ist, der ein im Wesentlichen durch dessen Querschnitt und Abstand zur Drehachse A definiertes Torusvolumen V_{T} aufweist. In einem Ringbereich dieses Torusvolumens V_{T} zirkuliert zwischen dem Turbinenrad 23, dem Pumpenrad 28 und dem Leitrad 38 das zur Drehmomentübertragung bzw. Verstärkung wirksame Fluid.

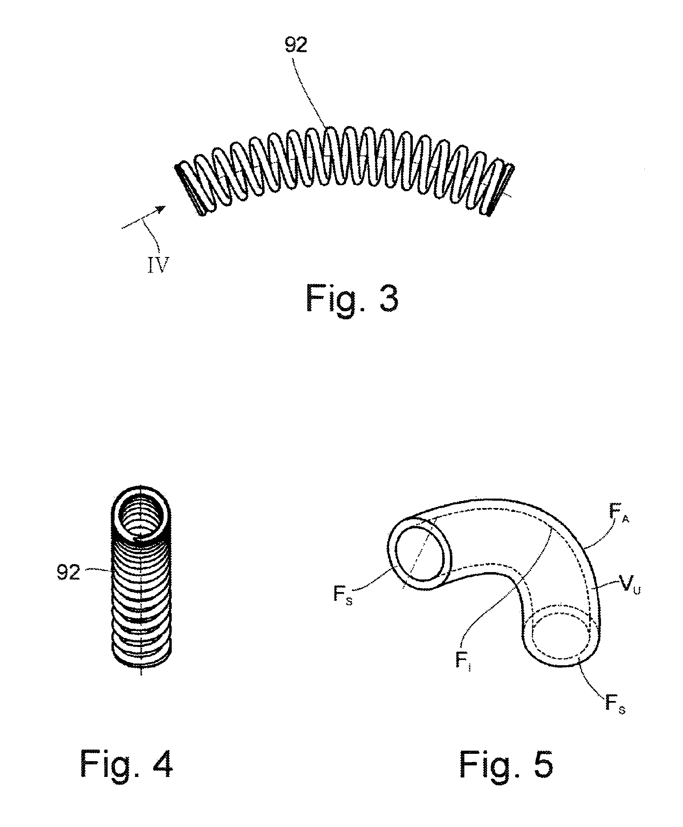

Jede der Dämpferfedereinheiten 76, 84 der Torsionsschwingungsdämpferbereiche 64, 66 weist ein in Fig. 2 mit gestricheltem Querschnitt veranschaulichtes Umhüllendenvolumen V_{U} auf. Dies wird im Folgenden mit Bezug auf eine in den Fig. 3 und 4 gezeigte Schraubendruckfeder 92 erläutert. Diese Schraubendruckfeder 92, welche beispielsweise eine der Dämpferfedereinheiten 68 bzw. 84 oder einen Teil davon bilden könnte, ist nach radial außen begrenzt durch eine an der Außenseite ihrer Windungen anliegende Außenumhüllungsfläche F_{A}. Nach radial innen begrenzt eine Innenumhüllungsfläche F_{I} das jeweilige Umüllendenvolumen V_{U}, das selbstverständlich an den Umfangsendbereichen dort endet, wo auch die Schraubendruckfeder 92 endet, hier also durch jeweilige ringartige Stirnflächen F_{S} begrenzt ist. Jedes dieser Umhüllendenvolumina V_{U} der verschiedenen Dämpferfedereinheiten 76 bzw. 84 stellt also im Wesentlichen gemäß der näherungsweise kreisartig um die Drehachse A gekrümmten Konfiguration der Dämpferfedereinheiten 76, 84 ein Segment eines Hohltorus dar.

Wenn, wie dies im Falle der radial innen liegenden zweiten Dämpferfedereinheiten 84 veranschaulicht ist, diese durch radial ineinander gestaffelte Schraubendruckfedern gebildet sind, so ist selbstverständlich dann das Umhüllendenvolumen V_{U} unter Berücksichtigung auch der Innenumhüllungsfläche einer innen liegenden Schraubendruckfeder begrenzt.

Gemäß den Prinzipien der vorliegenden Erfindung ist nun vorgesehen, dass das Gesamt-Umüllendenvolumen aller erster Dämpferfedereinheiten 76 und aller zweiter Dämpferfedereinheiten 84 im Bereich von 1/11 bis 1/4 des Torusvolumens des Torus 90 liegt, wobei hier vorzugsweise ein Bereich von 1/7 bis 1/5 vorgesehen werden kann. Auf diese Art und Weise wird im Verhältnis zu dem von dem Torus 90 eingenommenen Volumen V_{T} ein optimal ausgewähltes Volumen für die elastisch wirksamen Baugruppen der beiden Torsionsschwingungsdämpferbereiche 64, 66 bereitgestellt. Dabei sollte vorzugsweise das Umhüllendenvolumen V_{U} aller ersten Dämpferfedereinheiten 64 1/9 des Torusvolumens V_{T} nicht übersteigen bzw. 1/20 des Torusvolumens V_{T} nicht unterschreiten.

Im Verhältnis der beiden Torsionsschwingungsdämpferbereiche 64, 66 zueinander sollte das Umhüllendenvolumen V_{U} aller zweiter Dämpferfedereinheiten 84 mindestens die Hälfte des Umhüllendenvolumens V_{U} aller ersten Dämpferfedereinheiten 76 betragen.

In einem jeweiligen Umhüllendenvolumen V_{U} der verschiedenen Dämpferfedereinheiten 76, 84 ist nur ein gewisser Volumenanteil tatsächlich belegt durch die darin angeordneten Federelemente bzw. Schraubendruckfedern. Es hat sich hier als besonders vorteilhaft erwiesen, wenn dieser belegte Volumenanteil zwischen 30 % und 55 %, vorzugsweise zwischen 35 % und 50 % liegt.

Um bei derartiger Ausgestaltung sicherzustellen, dass auch bei Drehmomentübertragung durch Fluidumwälzung eine ausreichende Drehmoment-übertragungs- bzw. verstärkungskapazität vorliegt, sollte der Torus 90 einen Mindestdurchmesser von wenigstens 40 mm, vorzugsweise von wenigstens 50 mm haben, wobei hier darauf hinzuweisen ist, dass der Torus 90 nicht notwendigerweise mit kreisrundem Querschnitt ausgebildet sein muss. Er kann in radialer Richtung langgestreckt, also beispielsweise mit elliptischem oder ovalem Querschnitt ausgebildet sein. Weiterhin kann vorgesehen sein, dass der Außendurchmesser des ersten Torsionsschwingungsdämpferbereichs 64, wobei hier beispielsweise Bezug genommen werden kann auf den radial äußersten Bereich der ersten Dämpferfedereinheiten 76, näherungsweise im Bereich des Torus-Außendurchmessers liegt. Hier hat es sich als vorteilhaft erwiesen, wenn der Außendurchmesser des ersten Torsionsschwingungsdämpferbereichs 64 im Bereich des 0,9 bis 1,1 fachen des Außendurchmessers des Torus 90 liegt. Dies gewährleistet eine optimale Bauraumausnutzung und gleichzeitig ein großes Volumen, das für die Dämpferfedereinheiten genutzt werden kann. Weiterhin sollte dabei der Außendurchmesser des ersten Torsionsschwingungsdämpfers 64 ungefähr 1,1 bis 1,4 mal größer sein, als der Außendurchmesser der Überbrückungskupplungsanordnung 42, wobei hier beispielsweise Bezug genommen werden kann auf den Außendurchmesser derjenigen ringartigen Flächenbereiche der Reibelemente 48, 50, die in Reibwechselwirkung miteinander treten oder stehen.

Insbesondere bei einem Aufbau mit zwei radial gestaffelten Torsionsschwingungsdämpferbereichen 64, 66, wie er vorangehend beschrieben wurde, bei welchem die Turbinenradschale 30 in den Bereich zwischen den beiden Torsionsschwingungsdämpferbereichen eingekoppelt ist, ist es besonders vorteilhaft, wenn der mittlere Durchmesser der jeweiligen Torsionsschwingungsdämpferbereiche 64, 66, wobei hier wieder Bezug genommen werden kann auf den mittleren Durchmesser der Dämpferfedereinheiten 76, 84 der beiden Torsionsschwingungsdämpferbereiche 64, 66, bezogen auf die Drehachse A im Bereich von 1,5 bis 1,9, vorzugsweise zwischen 1,6 und 1,8 liegt.

Durch die Auswahl der Torsionsschwingungsdämpferbereiche 64, 66 im Verhältnis zu dem für die Fluidumwälzung genutzten Volumenbereich, nämlich dem Torusvolumen V_{T}, wird ein optimierter Betrieb eines derart ausgestalteten hydrodynamischen Drehmomentwandlers 10 erlangt, und zwar sowohl hinsichtlich der Drehmomentübertragung über das Pumpenrad 23 und das Turbinenrad 28, als auch über die Torsionsdämpferanordnung 34.

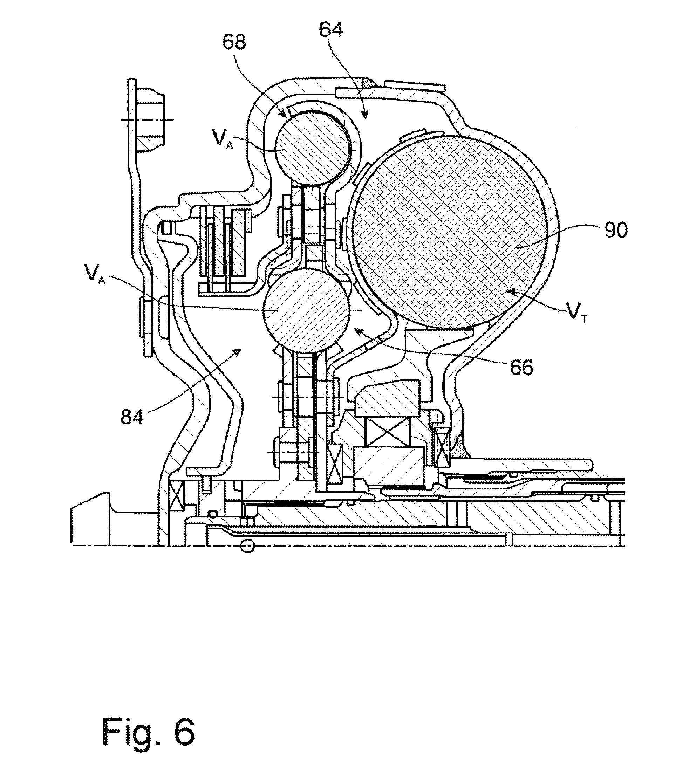

Ein weiteres Konstruktionsprinzip, welches für sich alleine oder im Kombination mit den vorangehend beschriebenen Angaben vorgesehen sein kann, ist in Fig. 6 veranschaulicht. Man erkennt auch hier wieder den Torus 90 und die beiden Torsionsschwingungsdämpferbereiche 64, 66 in radialer Staffelung mit serieller Wirksamkeit. Schematisch ist bei den ersten Dämpferfedereinheiten 76 und den zweiten Dämpferfedereinheiten 84 hier ein Außenumhüllendenvolumen V_{A} angedeutet, das unter Bezugnahme auf die Fig. 5 im Wesentlichen definiert bzw. umschlossen ist von der Außenumhüllungsfläche F_{A} und an den Umfangsendbereichen begrenzt ist durch jeweilige scheibenartige Stirnflächen. Hier sind also keine Hohl-Torusabschnitte, sondern Torusabschnitte definiert, die im Wesentlichen den ganzen von den Dämpferfedereinheiten 76 bzw. 84 eingenommenen Volumenbereich umfassen.

Gemäß einem weiteren Prinzip der vorliegenden Erfindung kann vorgesehen sein, dass das durch alle Dämpferfedereinheiten 76 und 84 der beiden Torsionsschwingungsdämpferbereiche 64, 66 eingenommene Gesamt-Außenumhüllendenvolumen im Bereich von 1/6 bis 1/4 des Volumens V_{T} des Torus 90 liegt. Wie bereits vorangehend angedeutet, kann dies selbstverständlich kombiniert sein damit, dass das bei derartig dann ausgestalteten Dämpferfedereinheiten vorhandene Umhüllendenvolumen V_{U}, welches im Wesentlichen wieder definiert ist durch einen Hohltorusabschnitt, bei den einzelnen Dämpferfedereinheiten im vorangehend detailliert erläuterten Verhältnis zum Torusvolumen V_{T} steht.

## Patentansprüche

1. Hydrodynamische Kopplungseinrichtung, insbesondere Drehmomentwandler, umfassend ein Gehäuse (12) mit einem Pumpenrad (23), ein in einem Innenraum (26) des Gehäuses (12) angeordnetes Turbinenrad (28) und eine Überbrückungskupplungsanordnung (42) mit einer ersten Reibflächenformation (44), die mit dem Gehäuse (12) zur gemeinsamen Drehung um eine Drehachse (A) verbunden ist, einer zweiten Reibflächenformation (46), die mit dem Turbinenrad (28) zur gemeinsamen Drehung verbunden ist, und einem Kolbenelement (56), wobei die zweite Reibflächenformation (46) über eine Torsionsdämpferanordnung (34) mit einer Turbinenradnabe (36) des Turbinenrads (28) gekoppelt ist, wobei die Torsionsdämpferanordnung (34) einen ersten Torsionsschwingungsdämpferbereich (64) mit einem mit der zweiten Reibflächenformation (46) verbundenen ersten Eingangsbereich (68) und einem über eine Mehrzahl erster Dämpferfedereinheiten (76) mit dem ersten Eingangsbereich (68) gekoppelten ersten Ausgangsbereich (72) sowie einen zweiten Torsionsschwingungsdämpferbereich (66) mit einem mit dem ersten Ausgangsbereich (72) verbundenen zweiten Eingangsbereich (78) und einem über eine Mehrzahl zweiter Dämpferfedereinheiten (84) mit dem zweiten Eingangsbereich (78) gekoppelten zweiten Ausgangsbereich (82) umfasst, wobei das Turbinenrad (28) mit einer Turbinenradschale (30) und das Pumpenrad (23) mit einer Pumpenradschale (16) einen um die Drehachse (A) umlaufenden, ringartigen Torus (90) mit einem Torusvolumen (V_{T}) begrenzen und wobei bei jedem der Torsionsschwingungsdämpferbereiche (64, 66) jede Dämpferfedereinheit (76, 84) ein Umhüllendenvolumen (V_{U}) aufweist, welches im Wesentlichen das zwischen einer Außenumhüllungsfläche (F_{A}) und einer Innenumhüllungsfläche (F_{I}) eingeschlossene Volumen umfasst, **dadurch gekennzeichnet**, daβ das durch alle Umhüllendenvolumina (V_{U}) aller Dämpferfedereinheiten (76, 84) des ersten Torsionsschwingungsdämpferbereichs (64) und des zweiten Torsionsschwingungsdämpferbereichs (66) gebildete Gesamt-Umhüllendenvolumen im Bereich 1/11 bis 1/4 des Torusvolumens (V_{T}) liegt.

2. Hydrodynamische Kopplungseinrichtung nach Anspruch 1,
**dadurch gekennzeichnet, dass** das Gesamt-Umhüllendenvolumen im Bereich von 1/7 bis 1/5 des Torusvolumens (V_{T}) liegt.

3. Hydrodynamische Kopplungseinrichtung nach Anspruch 1 oder 2,
**dadurch gekennzeichnet, dass** das Umhüllendenvolumen (V_{U}) aller erster Dämpferfedereinheiten (76) höchsten 1/9 des Torusvolumens (V_{T}) beträgt.

4. Hydrodynamische Kopplungseinrichtung nach einem der Ansprüche 1 bis 3,
**dadurch gekennzeichnet, dass** das Umhüllendenvolumen (V_{U}) aller ersten Dämpferfedereinheiten wenigstens 1/20 des Torusvolumens (V_{T}) beträgt.

5. Hydrodynamische Kopplungseinrichtung nach einem der Ansprüche 1 bis 4,
**dadurch gekennzeichnet, dass** das Umhüllendenvolumen (V_{U}) aller zweiten Dämpferfedereinheiten 84 wenigstens die Hälfte des Umhüllendenvolumens (V_{U}) aller ersten Dämpferfedereinheiten (78) beträgt.

6. Hydrodynamische Kopplungseinrichtung nach einem der Ansprüche 1 bis 5,
**dadurch gekennzeichnet, dass** bei den ersten Dämpferfedereinheiten (76) oder/und den zweiten Dämpferfedereinheiten (84) das Federmaterialvolumen im Bereich von 30% bis 55% des jeweiligen Umhüllendenvolumens (V_{U}) liegt.

7. Hydrodynamische Kopplungseinrichtung nach Anspruch 6,
**dadurch gekennzeichnet, dass** das Federmaterialvolumen im Bereich von 35% bis 50% des jeweiligen Umhüllendenvolumens (V_{U}) liegt.

8. Hydrodynamische Kopplungseinrichtung nach einem der Ansprüche 1 bis 7,
**dadurch gekennzeichnet, dass** der Torus (90) eine Mindestquerschnittsabmessung von wenigstens 40 mm aufweist.

9. Hydrodynamische Kopplungseinrichtung nach einem der Ansprüche 1 bis 7,
**dadurch gekennzeichnet, dass** der Torus (90) eine Mindestquerschnittsabmessung von wenigstens 50 mm aufweist.

10. Hydrodynamische Kopplungseinrichtung nach einem der Ansprüche 1 bis 7 und 8 oder 9,
**dadurch gekennzeichnet, dass** der erste Torsionsschwingungsdämpferbereich (64) einen Außendurchmesser aufweist, welcher im wesentlichen im Bereich des Torus-Außendurchmessers liegt.

11. Hydrodynamische Kopplungseinrichtung nach Anspruch 10,
**dadurch gekennzeichnet, dass** der Außendurchmesser des ersten Torsionsschwingungsdämpferbereichs (64) im Bereich vom 0,9 bis 1,1-fachen des Torus-Außendurchmessers liegt.

12. Hydrodynamische Kopplungseinrichtung nach einem der Ansprüche 1 bis 11,
**dadurch gekennzeichnet, dass** der Außendurchmesser des ersten Torsionsschwingungsdämpferbereichs (64) 1,1 bis 1,4 mal größer ist als der Außendurchmesser der Reibflächenformationen (44, 46).

13. Hydrodynamische Kopplungseinrichtung nach einem der Ansprüche 1 bis 12,
**dadurch gekennzeichnet, dass** die Turbinenradschale (30) mit dem ersten Ausgangsbereich (72) und dem zweiten Eingangsbereich (78) verbunden ist und der zweite Ausgangsbereich (82) mit der Turbinenradnabe (36) verbunden ist.

14. Hydrodynamische Kopplungseinrichtung nach Anspruch 13,
**dadurch gekennzeichnet, dass** das Verhältnis des mittleren Durchmessers des ersten Torsionsschwingungsdämpferbereichs (64) zum mittleren Durchmesser des zweiten Torsionsschwingungsdämpferbereichs (66) im Bereich von 1,5 bis 1,9 liegt.

15. Hydrodynamische Kopplungseinrichtung nach Anspruch 14,
**dadurch gekennzeichnet, dass** das Verhältnis im Bereich von 1,6 bis 1,8 liegt.

16. Hydrodynamische Kopplungseinrichtung nach einem der Ansprüche 1 bis 15,
**dadurch gekennzeichnet, dass** jede Dämpferfedereinheit (76, 84) ein Außenumhüllendenvolumen (V_{A}) aufweist, welches im Wesentlichen das von einer Außenumhüllungsfläche (F_{A}) umschlossene Volumen umfasst, und dass ein durch alle Außenumhüllendenvolumina aller Dämpferfedereinheiten (76, 84) des ersten Torsionsschwingungsdämpferbereichs (64) und des zweiten Torsionsschwingungsdämpferbereichs (66) gebildetes Gesamt-Außenumhüllendenvolumen im Bereich von 1/6 bis 1/4 des Torusvolumens (V_{T}) liegt.

17. Hydrodynamische Kopplungseinrichtung nach Anspruch 16,
**dadurch gekennzeichnet, dass** das Gesamt-Außenumhüllendenvolumen im Bereich von 1/5 bis 1/4 des Torusvolumens (V_{T}) liegt.

18. Hydrodynamische Kopplungseinrichtung, insbesondere Drehmomentwandler, umfassend ein Gehäuse (12) mit einem Pumpenrad (23), ein in einem Innenraum (26) des Gehäuses (12) angeordnetes Turbinenrad (28) und eine Überbrückungskupplungsanordnung (42) mit einer ersten Reibflächenformation (44), die mit dem Gehäuse (12) zur gemeinsamen Drehung um eine Drehachse (A) verbunden ist, einer zweiten Reibflächenformation (46), die mit dem Turbinenrad (28) zur gemeinsamen Drehung verbunden ist, und einem Kolbenelement (56), wobei die zweite Reibflächenformation (46) über eine Torsionsdämpferanordnung (34) mit einer Turbinenradnabe (36) des Turbinenrads (28) gekoppelt ist, wobei die Torsionsdämpferanordnung (34) einen ersten Torsionsschwingungsdämpferbereich (64) mit einem mit der zweiten Reibflächenformation (46) verbundenen ersten Eingangsbereich (68) und einem über eine Mehrzahl erster Dämpferfedereinheiten (76) mit dem ersten Eingangsbereich (68) gekoppelten ersten Ausgangsbereich (72) sowie einen zweiten Torsionsschwingungsdämpferbereich (66) mit einem mit dem ersten Ausgangsbereich (72) verbundenen zweiten Eingangsbereich (78) und einem über eine Mehrzahl zweiter Dämpferfedereinheiten (84) mit dem zweiten Eingangsbereich (78) gekoppelten zweiten Ausgangsbereich (82) umfasst, wobei das Turbinenrad (28) mit einer Turbinenradschale (30) und das Pumpenrad (23) mit einer Pumpenradschale (16) einen um die Drehachse (A) umlaufenden, ringartigen Torus (90) mit einem Torusvolumen (V_{T}) begrenzen und wobei bei jedem der Torsionsschwingungsdämpferbereiche (64, 66) jede Dämpferfedereinheit (76, 84) ein Außenumhüllendenvolumen (V_{A}) aufweist, welches im Wesentlichen das von einer Außenumhüllungsfläche (F_{A}) umschlossene Volumen umfasst, **dadurch gekennzeichnet, daß** ein durch alle Außenumhüllendenvolumina (V_{A}) aller Dämpferfedereinheiten (76, 84) des ersten Torsionsschwingungsdämpferbereichs (64) und des zweiten Torsionsschwingungsdämpferbereichs (66) gebildetes Gesamt-Außenumhüllendenvolumen im Bereich von 1/6 bis 1/4 des Torusvolumens (V_{T}) liegt.

19. Hydrodynamische Kopplungseinrichtung nach Anspruch 18,
**dadurch gekennzeichnet, dass** das Gesamt-Außenumhüllendenvolumen im Bereich von 1/5 und 1/4 des Torusvolumens liegt.

20. Hydrodynamische Kopplungseinrichtung nach einem der vorangehenden Ansprüche,
**dadurch gekennzeichnet, dass** der erste Torsionsschwingungsdämpferbereich (64) radial außerhalb des zweiten Torsionsschwingungsdämpferbereichs (66) und vorzugsweise im gleichen axialen Bereich wie dieser angeordnet ist.

## Claims

1. Hydrodynamic coupling device, in particular torque converter, comprising a housing (12) which has a pump wheel (23), comprising a turbine wheel (28) arranged in an interior space (26) of the housing (12), and comprising a lockup clutch arrangement (42) which has a first friction surface formation (44) connected to the housing (12) for common rotation about an axis of rotation (A), has a second friction surface formation (46) connected to the turbine wheel (28) for common rotation, and has a piston element (56), with the second friction surface formation (46) being coupled to a turbine wheel hub (36) of the turbine wheel (28) via a torsional damper arrangement (34), with the torsional damper arrangement (34) comprising a first torsional vibration damper region (64), which has a first input region (68) connected to the second friction surface formation (46) and has a first output region (72) coupled to the first input region (68) via a multiplicity of first damper spring units (76), and also a second torsional vibration damper region (66), which has a second input region (78) connected to the first output region (72) and has a second output region (82) coupled to the second input region (78) via a multiplicity of second damper spring units (84), with a turbine wheel shell (30) of the turbine wheel (28) and a pump wheel shell (16) of the pump wheel (23) delimiting an annular torus (90) which runs around the axis of rotation (A) and has a torus volume (V_{T}), and with each damper spring unit (76, 84) in each of the torsional vibration damper regions (64, 66) having an envelope volume (V_{U}) which encompasses substantially the volume enclosed between an outer envelope surface (F_{A}) and an inner envelope surface (F_{I}), **characterized in that** the total envelope volume formed by all the envelope volumes (V_{U}) of all the damper spring units (76, 84) of the first torsional vibration damper region (64) and of the second torsional vibration damper region (66) lies in the range from 1/11 to 1/4 of the torus volume (V_{T}).

2. Hydrodynamic coupling device according to Claim 1, **characterized in that** the total envelope volume lies in the range from 1/7 to 1/5 of the torus volume (V_{T}).

3. Hydrodynamic coupling device according to Claim 1 or 2,
**characterized in that** the envelope volume (V_{U}) of all the first damper spring units (76) amounts to at most 1/9 of the torus volume (V_{T}).

4. Hydrodynamic coupling device according to one of Claims 1 to 3,
**characterized in that** the envelope volume (V_{U}) of all the first damper spring units amounts to at least 1/20 of the torus volume (V_{T}).

5. Hydrodynamic coupling device according to one of Claims 1 to 4,
**characterized in that** the envelope volume (V_{U}) of all the second damper spring units (84) amounts to at least half of the envelope volume (V_{U}) of all the first damper spring units (76).

6. Hydrodynamic coupling device according to one of Claims 1 to 5,
**characterized in that**, in the first damper spring units (76) and/or the second damper spring units (84), the spring material volume lies in the range from 30% to 55% of the respective envelope volume (V_{U}).

7. Hydrodynamic coupling device according to Claim 6, **characterized in that** the spring material volume lies in the range from 35% to 50% of the respective envelope volume (V_{U}).

8. Hydrodynamic coupling device according to one of Claims 1 to 7,
**characterized in that** the torus (90) has a minimum cross-sectional dimension of at least 40 mm.

9. Hydrodynamic coupling device according to one of Claims 1 to 7,
**characterized in that** the torus (90) has a minimum cross-sectional dimension of at least 50 mm.

10. Hydrodynamic coupling device according to one of Claims 1 to 7 and 8 or 9,
**characterized in that** the first torsional vibration damper region (64) has an outer diameter which lies substantially in the region of the torus outer diameter.

11. Hydrodynamic coupling device according to Claim 10,
**characterized in that** the outer diameter of the first torsional vibration damper region (64) lies in the range from 0.9 to 1.1 times the torus outer diameter.

12. Hydrodynamic coupling device according to one of Claims 1 to 11,
**characterized in that** the outer diameter of the first torsional vibration damper region (64) is 1.1 to 1.4 times greater than the outer diameter of the friction surface formations (44, 46).

13. Hydrodynamic coupling device according to one of Claims 1 to 12,
**characterized in that** the turbine wheel shell (30) is connected to the first output region (72) and to the second input region (78), and the second output region (82) is connected to the turbine wheel hub (36).

14. Hydrodynamic coupling device according to Claim 13,
**characterized in that** the ratio of the mean diameter of the first torsional vibration damper region (64) to the mean diameter of the second torsional vibration damper region (66) lies in the range from 1.5 to 1.9.

15. Hydrodynamic coupling device according to Claim 14,
**characterized in that** the ratio lies in the range from 1.6 to 1.8.

16. Hydrodynamic coupling device according to one of Claims 1 to 15,
**characterized in that** each damper spring unit (76, 84) has an outer envelope volume (V_{A}) which substantially encompasses the volume enclosed by an outer envelope surface (F_{A}), and **in that** a total outer envelope volume formed by all the outer envelope volumes of all the damper spring units (76, 84) of the first torsional vibration damper region (64) and of the second torsional vibration damper region (66) lies in the range from 1/6 to 1/4 of the torus volume (V_{T}).

17. Hydrodynamic coupling device according to Claim 16,
**characterized in that** the total outer envelope volume lies in the range from 1/5 to 1/4 of the torus volume (V_{T}).

18. Hydrodynamic coupling device, in particular torque converter, comprising a housing (12) which has a pump wheel (23), comprising a turbine wheel (28) arranged in an interior space (26) of the housing (12), and comprising a lockup clutch arrangement (42) which has a first friction surface formation (44) connected to the housing (12) for common rotation about an axis of rotation (A), has a second friction surface formation (46) connected to the turbine wheel (28) for common rotation, and has a piston element (56), with the second friction surface formation (46) being coupled to a turbine wheel hub (36) of the turbine wheel (28) via a torsional damper arrangement (34), with the torsional damper arrangement (34) comprising a first torsional vibration damper region (64), which has a first input region (68) connected to the second friction surface formation (46) and has a first output region (72) coupled to the first input region (68) via a multiplicity of first damper spring units (76), and also a second torsional vibration damper region (66), which has a second input region (78) connected to the first output region (72) and has a second output region (82) coupled to the second input region (78) via a multiplicity of second damper spring units (84), with a turbine wheel shell (30) of the turbine wheel (28) and a pump wheel shell (16) of the pump wheel (23) delimiting an annular torus (90) which runs around the axis of rotation (A) and has a torus volume (V_{T}), and with each damper spring unit (76, 84) in each of the torsional vibration damper regions (64, 66) having an outer envelope volume (V_{A}) which encompasses substantially the volume enclosed by an outer envelope surface (F_{A}), **characterized in that** a total outer envelope volume formed by all the outer envelope volumes (V_{A}) of all the damper spring units (76, 84) of the first torsional vibration damper region (64) and of the second torsional vibration damper region (66) lies in the range from 1/6 to 1/4 of the torus volume (V_{T}).

19. Hydrodynamic coupling device according to Claim 18,
**characterized in that** the total outer envelope volume lies in the range from 1/5 to 1/4 of the torus volume.

20. Hydrodynamic coupling device according to one of the preceding claims,
**characterized in that** the first torsional vibration damper region (64) is arranged radially outside, and preferably in the same axial region as, the second torsional vibration damper region (66).

## Revendications

1. Dispositif de couplage hydrodynamique, en particulier convertisseur de couple, comprenant un boîtier (12) avec une roue de pompe (23), une roue de turbine (28) disposée dans un espace interne (26) du boîtier (12), et un agencement d'embrayage de court-circuitage (42) avec une première formation de surface de friction (44), qui est connectée au boîtier (12) en vue d'une rotation commune autour d'un axe de rotation (A), une deuxième formation de surface de friction (46), qui est connectée à la roue de turbine (28) en vue d'une rotation commune, et un élément de piston (56), la deuxième formation de surface de friction (46) étant couplée par le biais d'un agencement d'amortisseur de torsion (34) à un moyeu de roue de turbine (36) de la roue de turbine (28), l'agencement d'amortisseur de torsion (34) comprenant une première région d'amortisseur d'oscillations de torsion (64) avec une première région d'entrée (68) connectée à la deuxième formation de surface de friction (46) et une première région de sortie (72) couplée par le biais d'une pluralité de premières unités de ressort amortisseur (76) à la première région d'entrée (68) ainsi qu'une deuxième région d'amortisseur d'oscillations de torsion (66) avec une deuxième région d'entrée (78) connectée à la première région de sortie (72) et une deuxième région de sortie (82) couplée par le biais d'une pluralité de deuxièmes unités de ressort amortisseur (84) à la deuxième région d'entrée (78), la roue de turbine (28) et la roue de pompe (23) délimitant, respectivement avec une coque de roue de turbine (30) et avec une coque de roue de pompe (16), un tore (90) de forme annulaire tournant autour de l'axe de rotation (A) et ayant un volume de tore (V_{T}) et chaque unité de ressort amortisseur (76, 84) présentant, pour chacune des régions d'amortisseur d'oscillations de torsion (64, 66), un volume d'enveloppement (V_{U}), qui comprend essentiellement le volume renfermé entre une surface d'enveloppement extérieure (F_{A}) et une surface d'enveloppement intérieure (F_{I}), **caractérisé en ce qu'**un volume d'enveloppement total formé par tous les volumes d'enveloppement (V_{U}) de toutes les unités de ressort amortisseur (76, 84) de la première région d'amortisseur d'oscillations de torsion (64) et de la deuxième région d'amortisseur d'oscillations de torsion (66) est compris dans la plage de 1/11 à 1/4 du volume du tore (V_{T}).

2. Dispositif de couplage hydrodynamique selon la revendication 1,
**caractérisé en ce que** le volume d'enveloppement total est compris dans la plage de 1/7 à 1/5 du volume du tore (V_{T}).

3. Dispositif de couplage hydrodynamique selon la revendication 1 ou 2,
**caractérisé en ce que** le volume d'enveloppement (V_{U}) de toutes les premières unités de ressort amortisseur (76) vaut au plus 1/9 du volume du tore (V_{T}).

4. Dispositif de couplage hydrodynamique selon l'une quelconque des revendications 1 à 3,
**caractérisé en ce que** le volume d'enveloppement (V_{U}) de toutes les premières unités de ressort amortisseur vaut au moins 1/20 du volume du tore (V_{T}).

5. Dispositif de couplage hydrodynamique selon l'une quelconque des revendications 1 à 4,
**caractérisé en ce que** le volume d'enveloppement (V_{U}) de toutes les deuxièmes unités de ressort amortisseur (84) vaut au moins la moitié du volume d'enveloppement (V_{U}) de toutes les premières unités de ressort amortisseur (76).

6. Dispositif de couplage hydrodynamique selon l'une quelconque des revendications 1 à 5,
**caractérisé en ce que** dans les premières unités de ressort amortisseur (76) et/ou les deuxièmes unités de ressort amortisseur (84), le volume de matériau de ressort est compris dans la plage de 30% à 55% du volume d'enveloppement respectif (V_{U}).

7. Dispositif de couplage hydrodynamique selon la revendication 6, **caractérisé en ce que** le volume de matériau de ressort est compris dans la plage de 35% à 50% du volume d'enveloppement (V_{U}).

8. Dispositif de couplage hydrodynamique selon l'une quelconque des revendications 1 à 7,
**caractérisé en ce que** le tore (90) présente une dimension en section transversale minimale d'au moins 40 mm.

9. Dispositif de couplage hydrodynamique selon l'une quelconque des revendications 1 à 7,
**caractérisé en ce que** le tore (90) présente une dimension en section transversale minimale d'au moins 50 mm.

10. Dispositif de couplage hydrodynamique selon l'une quelconque des revendications 1 à 7 et 8 ou 9, **caractérisé en ce que** la première région d'amortisseur d'oscillations de torsion (64) présente un diamètre extérieur qui est compris essentiellement dans la plage du diamètre extérieur du tore.

11. Dispositif de couplage hydrodynamique selon la revendication 10,
**caractérisé en ce que** le diamètre extérieur de la première région d'amortisseur d'oscillations de torsion (64) est compris dans la plage de 0,9 à 1,1 fois le diamètre extérieur du tore.

12. Dispositif de couplage hydrodynamique selon l'une quelconque des revendications 1 à 11,
**caractérisé en ce que** le diamètre extérieur de la première région d'amortisseur d'oscillations de torsion (64) est supérieure de 1,1 à 1,4 fois au diamètre extérieur des formations de surface de friction (44, 46).

13. Dispositif de couplage hydrodynamique selon l'une quelconque des revendications 1 à 12,
**caractérisé en ce que** la coque de roue de turbine (30) est connectée à la première région de sortie (72) et à la deuxième région d'entrée (78), et la deuxième région de sortie (82) est connectée au moyeu de roue de turbine (36).

14. Dispositif de couplage hydrodynamique selon la revendication 13,
**caractérisé en ce que** le rapport du diamètre moyen de la première région d'amortisseur d'oscillations de torsion (64) au diamètre moyen de la deuxième région d'amortisseur d'oscillations de torsion (66) est compris dans la plage de 1,5 à 1,9.

15. Dispositif de couplage hydrodynamique selon la revendication 14,
**caractérisé en ce que** le rapport est compris dans la plage de 1,6 à 1,8.

16. Dispositif de couplage hydrodynamique selon l'une quelconque des revendications 1 à 15,
**caractérisé en ce que** chaque unité de ressort amortisseur (76, 84) présente un volume d'enveloppement extérieur (V_{A}) qui comprend essentiellement le volume entouré par une surface d'enveloppement extérieure (F_{A}), et **en ce qu'**un volume d'enveloppement extérieur total formé par tous les volumes d'enveloppement extérieurs de toutes les unités de ressort amortisseur (76, 84) de la première région d'amortisseur d'oscillations de torsion (64) et de la deuxième région d'amortisseur d'oscillations de torsion (66) est compris dans la plage de 1/6 à 1/4 du volume du tore (V_{T}).

17. Dispositif de couplage hydrodynamique selon la revendication 16,
**caractérisé en ce que** le volume d'enveloppement extérieur total est compris dans la plage de 1/5 à 1/4 du volume du tore (V_{T}).

18. Dispositif de couplage hydrodynamique, en particulier convertisseur de couple, comprenant un boîtier (12) avec une roue de pompe (23), une roue de turbine (28) disposée dans un espace interne (26) du boîtier (12), et un agencement d'embrayage de court-circuitage (42) avec une première formation de surface de friction (44), qui est connectée au boîtier (12) en vue d'une rotation commune autour d'un axe de rotation (A), une deuxième formation de surface de friction (46), qui est connectée à la roue de turbine (28) en vue d'une rotation commune, et un élément de piston (56), la deuxième formation de surface de friction (46) étant couplée par le biais d'un agencement d'amortisseur de torsion (34) à un moyeu de roue de turbine (36) de la roue de turbine (28), l'agencement d'amortisseur de torsion (34) comprenant une première région d'amortisseur d'oscillations de torsion (64) avec une première région d'entrée (68) connectée à la deuxième formation de surface de friction (46) et une première région de sortie (72) couplée par le biais d'une pluralité de premières unités de ressort amortisseur (76) à la première région d'entrée (68) ainsi qu'une deuxième région d'amortisseur d'oscillations de torsion (66) avec une deuxième région d'entrée (78) connectée à la première région de sortie (72) et une deuxième région de sortie (82) couplée par le biais d'une pluralité de deuxièmes unités de ressort amortisseur (84) à la deuxième région d'entrée (78), la roue de turbine (28) et la roue de pompe (23) délimitant, respectivement avec une coque de roue de turbine (30) et avec une coque de roue de pompe (16), un tore (90) de forme annulaire tournant autour de l'axe de rotation (A) et ayant un volume de tore (V_{T}) et chaque unité de ressort amortisseur (76, 84) présentant, pour chacune des régions d'amortisseur d'oscillations de torsion (64, 66), un volume d'enveloppement extérieur (V_{A}), qui comprend essentiellement le volume renfermé par une surface d'enveloppement extérieure (F_{A}), **caractérisé en ce qu'**un volume d'enveloppement extérieur total formé par tous les volumes d'enveloppement extérieurs (V_{A}) de toutes les unités de ressort amortisseur (76, 84) de la première région d'amortisseur d'oscillations de torsion (64) et de la deuxième région d'amortisseur d'oscillations de torsion (66) est compris dans la plage de 1/6 à 1/4 du volume du tore (V_{T}).

19. Dispositif de couplage hydrodynamique selon la revendication 18,
**caractérisé en ce que** le volume d'enveloppement extérieur total est compris dans la plage de 1/5 à 1/4 du volume du tore.

20. Dispositif de couplage hydrodynamique selon l'une quelconque des revendications précédentes, **caractérisé en ce que** la première région d'amortisseur d'oscillations de torsion (64) est disposée radialement à l'extérieur de la deuxième région d'amortisseur d'oscillations de torsion (66) et de préférence dans la même région axiale que celle-ci.
